# EUROPÄISCHE PATENTSCHRIFT

(11) **EP 0 415 248 B1**
(45) Veröffentlichungstag und Bekanntmachung des Hinweises auf die Patenterteilung: **13.04.1994**
(21) Anmeldenummer: 90116034.1
(22) Anmeldetag: 22.08.1990
(51) Int. Cl.: C08F 8/46, C08F 10/10, C08F 4/06

(54) **Modifiziertes Polyisobuten**
Modified polyisobutylene
Polyisobutylène modifié

(30) Priorität: 31.08.1989 DE 3928811
(43) Veröffentlichungstag der Anmeldung: 06.03.1991
(73) Patentinhaber: BASF Aktiengesellschaft, 67063 Ludwigshafen (DE)
(72) Erfinder: Bender, Dietmar, Dr., D-6707 Schifferstadt (DE); Bronstert, Klaus, Dr., D-6719 Carlsberg (DE)

(56) Entgegenhaltungen:
- EP-A- 0 064 924
- EP-A- 0 265 053
- US-A- 4 029 592
- US-A- 4 316 973
- US-A- 4 767 885

## Beschreibung

Die Erfindung bezieht sich auf neue, modifizierte Polymere des Isobutens und deren Herstellung durch Umsetzung der terminalen Doppelbindung von Polyisobuten, das durch Dehydrohalogenierung der Reaktionsprodukte der carbokationischen Polymerisation von Isobuten zugänglich ist, mit Maleinsäureanhydrid.

Die carbokationische Polymerisation von Isobuten gelingt bekanntlich mittels olefinischer Initiatoren der allgemeinen Struktur A oder B

X-R¹-X (A)

oder 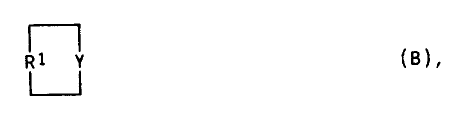
wobei R¹ für einen zweiwertigen, olefinisch ungesättigten Rest steht, X ein Halogenatom, eine Alkoxy- oder Alkanoyloxygruppe und Y ein Sauerstoffatom oder eine OCO-Gruppe bedeutet. BCl₃ dient als Coinitiator.

Olefinische Initiatoren haben gegenüber den aromatischen Initiatoren den Vorteil, daß Nebenreaktionen der reaktiven Kettenenden mit dem Initiator vermieden werden. Es entstehen keine Indanstrukturen - vgl. Polymer Bulletin 18, 123 (1987); 20, 221 (1988); 20, 229 (1988) - die den anwendungstechnischen Wert der Telechele wegen ihrer geringen Reaktivität drastisch reduzieren. Die Funktionalität (d.h. Anteil der reaktiven Kettenenden) der Telechele entspricht vielmehr dem erwarteten Wert von 2.

Initiatorverbindungen der allgemeinen Struktur A¹ und B¹ 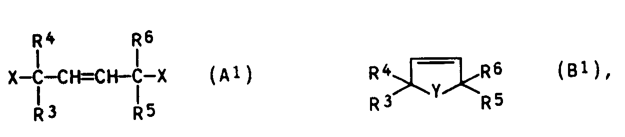
bei denen R³-R⁶ Wasserstoff oder Alkyl oder Alkoxy mit jeweils 1 bis 20 C-Atomen sein können, sind in Polymer Bulletin, Band 21, S. 5-12 und 125 (1989) und Band 18, 433 (1987) beschrieben.

Für die meisten Einsatzgebiete ist die bei der Polymerisation entstehende Endgruppe -CH₂-C(CH₃)₂Cl nicht reaktiv genug, so daß ihre Umwandlung in Hydroxyl-, Carboxyl- oder Epoxygruppen notwendig wird. Die zentrale Zwischenstufe dieser Umsetzungen ist ein H₂C=CCH₃-CH₂-terminiertes Telechel, das aus dem Cl-terminierten Vorläufer durch Dehydrohalogenierung mit z.B. K-tert.butanolat zugänglich ist. Ein olefinisch initiiertes Telechel enthält nach dieser Umsetzung neben der vom Initiator stammenden Doppelbindung zwei terminale Doppelbindungen. Während die weiteren Umsetzungen bei Telechelen mit aromatischer Initiatorsequenz durch die unterschiedliche Reaktivität des Aromaten und der Doppelbindungen ohne Nebenreaktion am Initiatorbaustein ablaufen, besteht bei Telechelen mit olefinischem Initiatorbaustein die Gefahr, daß neben den Endgruppen auch die zentrale Doppelbindung reagiert. Beispiele, wie die Spaltung der zentralen Doppelbindung mit OsO₄ sind aus Polymer Bulletin 18, 433 (1987) bekannt. Umsetzungen mit olefinisch initiierten Telechelen des Isobutens sind offensichtlich aus diesem Grund bisher nicht beschrieben.

Es wurde nun gefunden, daß olefinisch terminierte Telechele des Isobutens, die mittels eines olefinischen Initiators gestartet werden, selektiv an den terminalen Doppelbindungen mit Maleinsäureanhydrid umsetzbar sind. Damit sind neue Verbindungen der allgemeinen Formel I zugänglich.

Erfindungsgegenstand sind demnach modifizierte Polymere des Isobutens der allgemeinen Struktur I 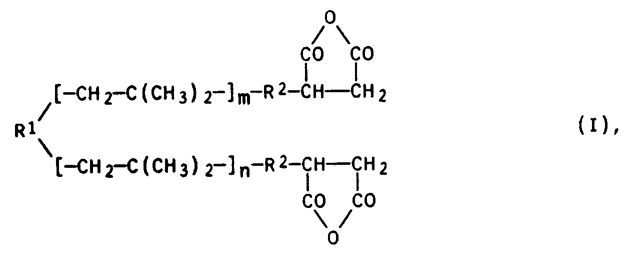
wobei m und n den jeweiligen Polymerisationsgrad, vorzugsweise 1 bis 1000, R¹ den olefinischen Rest des Initiators und R² einen der zweiwertigen Reste 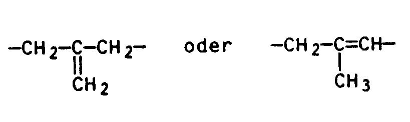
bedeuten.

Bevorzugt hat R¹ die Struktur -CR³R⁴-CH=CH-CR⁵R⁶-.

Die zur Herstellung der erfindungsgemäßen Polymeren I benötigten Vorprodukte besitzen anstelle des Restes -R²-succinyl einen Isobutenylrest.

Bei der Umsetzung der Vorprodukte mit Maleinsäureanhydrid werden die terminalen CH₂=C(CH₃)-CH₂-Gruppen in zweiwertige Reste der allgemeinen Formel R² umgewandelt, wobei R² für einen der zweiwertigen Reste 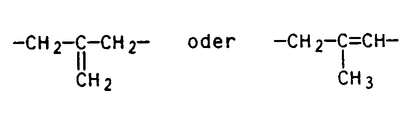
steht.

Zur quantitativen Umsetzung der Doppelbindungen mit Maleinsäureanhydrid erhitzt man die olefinisch terminierten Telechele mit einem bis zu 20fachen Überschuß auf 150 bis 240°C. Bevorzugt verwendet man einen 1,5 bis 3-fachen Überschuß von Maleinsäureanhydrid und eine Temperatur von 180°C bis 210°C. Es ist empfehlenswert, die Umsetzung unter Ausschluß von Sauerstoff durchzuführen, da andernfalls verstärkt die Bildung von Rückständen beobachtet wird. Nach der Umsetzung kann die verbleibende Maleinsäure ohne großen Aufwand durch Filtration vom Telechel abgetrennt werden. Der Verlauf der Reaktion kann mittels ¹H-NMR-Spektroskopie anhand des Verlustes der Resonanz der terminalen olefinischen Protonen verfolgt werden. Bei einer Reaktionstemperatur von 200°C und einem 2fachen Überschuß an Maleinsäureanhydrid sind die olefinischen Signale der beiden CH₂=CCH₃-CH₂-Endgruppen nach 5 Stunden vollständig verschwunden. Die Resonanz der Initiatorsequenz bleibt dagegen unverändert erhalten. Aus den ¹H-NMR-Spektren ist weiterhin zu erkennen, daß die Umsetzung zu zwei konfigurationisomeren Gruppen der allgemeinen Formel R² führt, die sich bezüglich der Lage der neu entstehenden Doppelbindung unterscheiden. Eine Isomerisierung der terminalen CH₂=CCH₃-CH₂-Gruppen zu den weniger reaktiven C(CH₃)₂=CH-Gruppen wurde nicht beobachtet.

Zur Herstellung der die Endgruppe -CH₂-C(CH₃)₂Cl tragenden ersten Vorprodukte werden die eingangs erwähnten Initiatoren der allgemeinen Struktur A¹ und B¹ bevorzugt, in der R³ bis R⁶ Wasserstoff, C₁-C₈-Alkyl oder ggf. substituiertes C₅-C₆-Cycloalkyl bedeuten, X für C₁-C₈-Alkanoyloxy, C₁-C₈-Alkoxy oder Halogen (Br, Cl) und Y für Sauerstoff oder -O-CO-steht.

Besonders bevorzugt sind Telechele mit Alkyl- oder Cycloalkylgruppen als Substituenten (R³ bis R⁶).

Zur quantitativen Umsetzung allen Halogens zu olefinischen Endgruppen löst man in THF, versetzt mit 4-fachem Überschuß K-t-Butanolat und erhitzt für 24 Stunden am Rückfluß. Verwendet man anstelle von K-t-Butanolat die Natriumsalze von n-Alkoholen, so entstehen neben den H₂C=C(CH₃)-CH₂-Endgruppen im geringem Umfang (CH₃)₂C=CH-Endgruppen, die mit Maleinsäureanhydrid nur wenig reagieren.

### Experimenteller Teil:

### Analytik:

Zur Charakterisierung der Telechele wurden Chlorbestimmung, GPC-Messung und ¹H-NMR-Spektren herangezogen.

### Cl-terminierte Telechele

Die ¹H-NMR-Spektroskopie erlaubt es, zwischen den Protonen der Endgruppe und denen der Hauptkette zu unterscheiden (Polymer Bulletin 3, 339 (1980); Polymer Bulletin 21, 5 (1989)). Aus dem Intensitätsverhältnis der Resonanzen terminaler Methyl- und Methylengruppen bei δ = 1,67 bzw. 1,96 ppm sowie nicht-terminaler Methyl- und Methylengruppen bei δ = 1,1 bzw. 1,4 ppm wurde das mittlere Molgewicht Mn berechnet. Dieses Ergebnis wurde durch GPC-Messung mit Polyisobuten-Eichung sowie Chlorbestimmung gesichert.

### Olefinisch terminierte Telechele

In den ¹H-NMR-Spektren der Telechele erscheinen die Signale der entstandenen olefinischen Endgruppen, die CH₂=C(CH₃)CH₂- oder (CH₃)₂C=CH-Konstitution haben können, separiert bei δ = 4,62, 4,85 und 5,15 ppm. Aus dem Verhältnis der Intensität dieser Resonanzen zum Signal der olefinischen Initiatorsequenz bei 5,30 ppm wurde der Dehydrohalogenierungsgrad bestimmt. Ergänzt wurden diese Messungen durch Chlorbestimmungen, die mit den NMR-Befunden übereinstimmten.

### Bernsteinsäureanhydrid-terminierte Telechele

Für die ¹H-NMR-Spektren der maleinierten Produkte sind die Absorption bei 4,9 ppm und im Bereich von 3,5 bis 2,0 ppm charakteristisch. Der vollständige Verlust der olefinischen Resonanzen des CH₂=CCH₃-CH₂-terminierten Vorläufers zeigt den quantitativen Umsatz an. Bei der exakten Zuordnung der Signale kann auf die Angaben in European Polymer Journal Vol. 20, No. 3, 281 bis 290, 1984 zurückgegriffen werden.

### Beispiel 1

### Cl-C(CH₃)₂-CH₂-terminiertes Telechel

In einem 4-l Rührreaktor mit Trockeneiskühler werden 2,5 l Methylchlorid, 200 ml Bortrichlorid, 100 ml Methylenchlorid und 12,6 g 2,2,5,5-Tetramethyldihydrofuran für 15 Sekunden miteinander vermischt und innerhalb von 5 Minuten 210 ml Isobuten zugetropft. Man läßt 6 Stunden bei -40°C rühren und tropft anschließend 600 ml Methanol zu. Man wärmt auf und läßt die flüchtigen Bestandteile abdampfen. Das Telechel wird wie üblich wäßrig aufgearbeitet.

### Beispiel 2

### CH₂=C(CH₃)-CH₂-terminiertes Telechel

100 g eines Cl-terminierten Telechels mit einem Molgewicht Mn von 1500 g/mol werden in 500 ml THF gelöst und mit 75 g K-t-Butanolat versetzt. Die Mischung wird für 48 Stunden am Rückfluß erhitzt und nach Entfernen des THF in Toluol aufgenommen, mit Wasser extrahiert und eingeengt.

### Beispiel 3

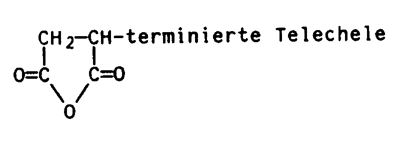

100 g eines olefinisch terminierten Telechels mit einem Molekulargewicht von 1500 g/mol werden mit 26,4 g Maleinsäureanhydrid versetzt und für 5 Stunden auf 200°C erhitzt. Der Ansatz wird nach dem Erkalten in Dekalin aufgenommen, das unlösliche Maleinsäureanhydrid wird abfiltriert und das Dekalin im Ölpumpenvakuum bei 100°C abgezogen.

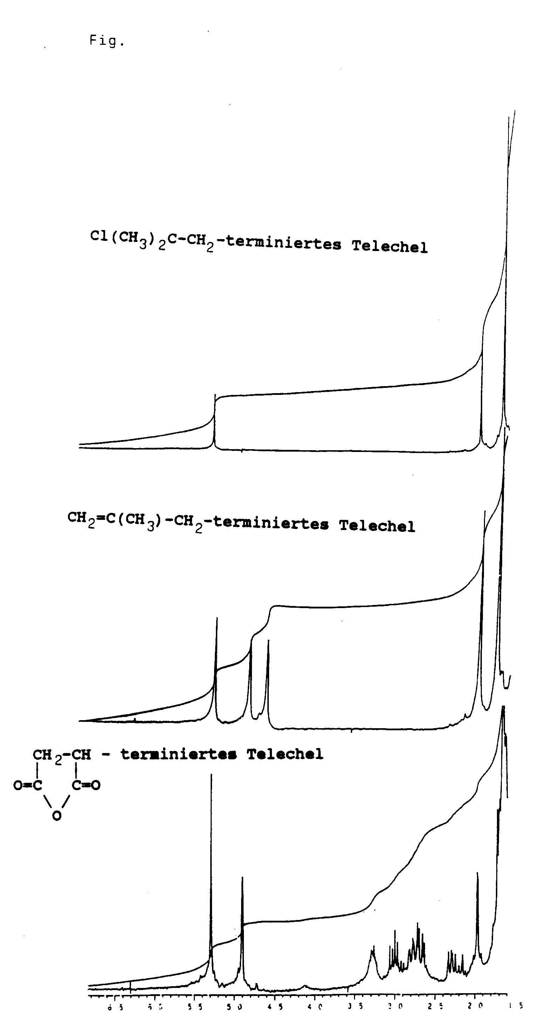

Die ¹H-NMR-Spektren der drei Telechelen sind in der Figur zusammengefaßt. Das Spektrum des maleinierten Telechels zeigt die quantitative Umwandlung aller terminalen Doppelbindungen an. Mₙ (GPC) steigt auf 1600 g/mol. Das Verhältnis M_{w}/Mₙ bleibt unverändert.

## Patentansprüche

1. Modifiziertes Polyisobuten der allgemeinen Formel I 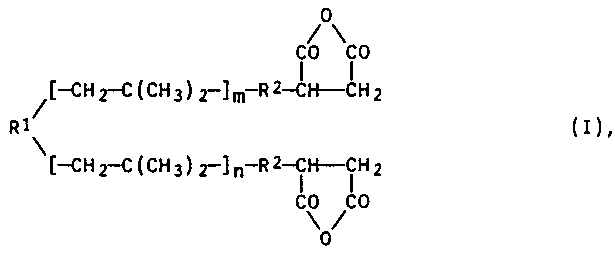 in der R¹ einen olefinisch ungesättigten zweiwertigen Rest,
R² einen der zweiwertigen Reste 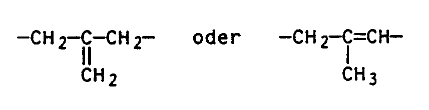 und m und n den Polymerisationsgrad bedeuten.

2. Polyisobuten nach Anspruch 1, das Bausteine mit einem Polymerisationsgrad m und n von 1 bis 1000 aufweist.

3. Polyisobuten nach Anspruch 1, bei denen R¹ die Struktur -CR³R⁴-CH=CH-CR⁵R⁶- aufweist, wobei R³ bis R⁶ Wasserstoff oder Alkyl oder Alkoxy mit jeweils 1 bis 20 C-Atomen bedeutet.

4. Polyisobuten, wie es nach dem Verfahren des Anspruchs 5 erhalten wird.

5. Verfahren zur Herstellung der Polymeren der Struktur I nach Anspruch 1, dadurch gekennzeichnet, daß man in an sich bekannter Weise Isobuten der carbokationischen Polymerisation mit Bortrichlorid und einem Olefin der Struktur A oder B unterwirft
X-R¹-X (A) 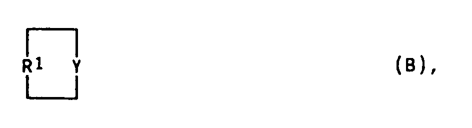
wobei R¹ für eine olefinische Gruppe, X für Halogen, Alkoxy oder Alkanoyloxy und Y für Sauerstoff oder -O-CO- steht, die erhaltenen Polyisobuten-(α,ω)-dihalogenide dehydrohalogeniert und mit Maleinsäureanhydrid umsetzt.

## Claims

1. A modified polyisobutene of the general formula I 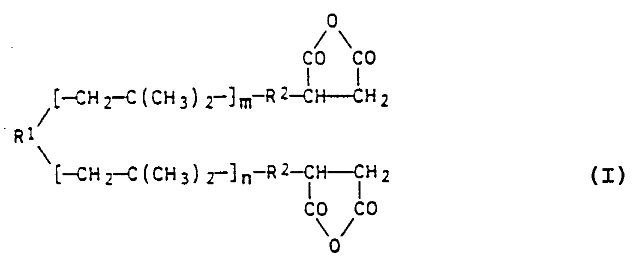 where R¹ is an olefinically unsaturated divalent radical, R² is one of the divalent radicals 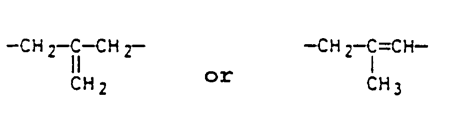 and m and n are each the degree of polymerization.

2. A polyisobutene as claimed in claim 1, wherein the degrees of polymerization m and n are each from 1 to 1000.

3. A polyisobutene as claimed in claim 1, wherein R¹ has the structure -CR³R⁴-CH=CH-CR⁵R⁶-, where R³, R⁴, R⁵ and R⁶ are each hydrogen or alkyl or alkoxy each of 1 to 20 carbon atoms.

4. A polyisobutene as obtained by the process of claim 5.

5. A process for preparing a polymer of the structure I as claimed in claim 1, which comprises subjecting isobutene to a conventional carbocationic polymerization with boron trichloride and an olefin of the structure A or B
X-R¹-X (A) 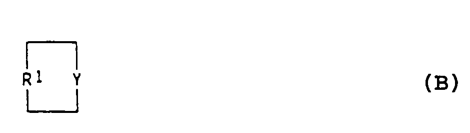
where R¹ is an olefinic group, X is halogen, alkoxy or alkanoyloxy, and Y is oxygen or -O-CO-, dehydrohalogenating the resulting polyisobutene (α,ω)-dihalide, and reacting the dehydrohalogenated product with maleic anhydride.

## Revendications

1. Polyisobutène modifié de la formule générale (I) : 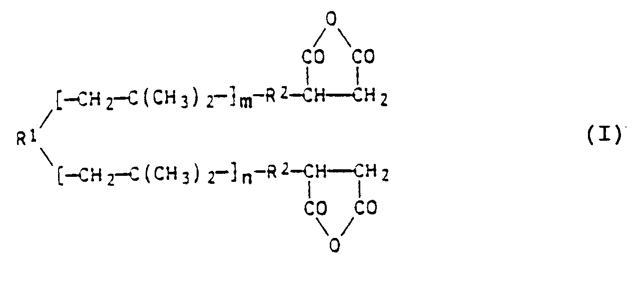 dans laquelle R¹ représente un radical bivalent oléfiniquement insaturé, R² représente l'un des radicaux bivalents suivants : 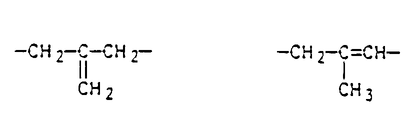 et m et n représentent le degré de polymérisation.

2. Polyisobutène selon la revendication 1, qui présente des éléments constitutifs d'un degré de polymérisation m et n de 1 à 1000.

3. Polyisobutène suivant la revendication 1, caractérisé en ce que R¹ représente la structure -CR³R⁴-CH=CH-CR⁵R⁶, où R³ à R⁶ représentent des atomes d'hydrogène ou des radicaux alkyle ou alcoxy comportant à chaque fois de 1 à 20 atomes de carbone.

4. Polyisobutène, tel qu'obtenu par mise en oeuvre du procédé de la revendication 5.

5. Procédé de préparation de polymères de la structure I suivant la revendication 1, caractérisé en ce que, d'une manière en soi connue, on soumet l'isobutène à la polymérisation carbocationique avec du trichlorure de bore et une oléfine de la structure A ou B :
X-R¹-X (A) 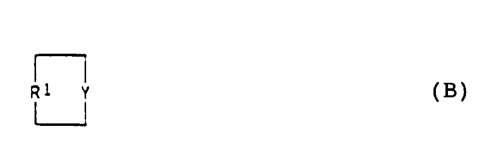
où R¹ représente un radical oléfinique, X représente un atome d'halogène, un radical alcoxy ou alcanoyloxy et Y représente un atome d'oxygène ou le radical -O-CO-, on soumet les (α,ω)-dihalogénures de polyisobutène à une déshydrohalogénation et on fait réagir le produit obtenu avec l'anhydride maléique.
